(19) Europäisches Patentamt
European Patent Office
Office européen des brevets

(11) Veröffentlichungsnummer: **0 381 029 B1**

(12) **EUROPÄISCHE PATENTSCHRIFT**

(45) Veröffentlichungstag der Patentschrift: **08.06.94**

(21) Anmeldenummer: **90101377.1**

(22) Anmeldetag: **24.01.90**

(51) Int. Cl.5: **C08F 220/12**, C08F 220/18, C08F 220/30, C08J 7/04, C08F 265/06, //(C08F220/12, 220:18,220:30),(C08F220/18, 220:12),(C08F220/30,220:12)

(54) **Wässrige Polyacrylat-Systeme für Lackierung von Kunststoffoberflächen.**

(30) Priorität: **28.01.89 DE 3902555**

(43) Veröffentlichungstag der Anmeldung: **08.08.90 Patentblatt 90/32**

(45) Bekanntmachung des Hinweises auf die Patenterteilung: **08.06.94 Patentblatt 94/23**

(84) Benannte Vertragsstaaten: **AT BE CH DE DK ES FR GB IT LI NL SE**

(56) Entgegenhaltungen:
**EP-A- 0 018 847**
**EP-A- 0 020 125**
**EP-A- 0 115 066**

(73) Patentinhaber: **RÖHM GMBH**
**Kirschenallee**
**D-64293 Darmstadt(DE)**

(72) Erfinder: **Elser, Wilhelm**
**Am Sportfeld 1**
**D-6103 Griesheim(DE)**
Erfinder: **Langerbeins, Klaus, Dr.**
**Uhlandstrasse 5b**
**D-6070 Langen(DE)**
Erfinder: **Tessmer, Dieter**
**Feuerbachstrasse 77**
**D-6090 Rüsselsheim(DE)**
Erfinder: **Rausch, Ursula**
**Karl-Liebknecht-Strasse 18**
**D-6103 Griesheim(DE)**
Erfinder: **Fölsch, Karl-Josef, Dr.**
**Backhaushohl 19**
**D-6500 Mainz(DE)**

**EP 0 381 029 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Gebiet der Erfindung

Die Erfindung betrifft die Verwendung von wäßrigen Dispersionen von Poly(meth)acrylaten für die Herstellung von Überzügen auf festen Kunststoffoberflächen durch Lackieren.

Stand der Technik

Nach der Verarbeitung von Polymeren, den Kunststoff-Rohstoffen, zu Halbzeugen und Fertigteilen, werden die dabei erhaltenen Formteile meist noch einer Oberflächenbehandlung unterzogen. Für diese Oberflächenbehandlung, die am einfachsten aus einer Beschichtung mit einem Lack besteht, können sowohl dekorative als auch funktionelle Gründe maßgebend sein. Diese beiden Lackierungsgründe an Kunststoffkörpern überschneiden sich in der Praxis in den meisten Fällen. So kann man mit Klarlacken oder pigmentierten Lacken sowohl den Glanzgrad verbessern, oder verschiedene Farbtöne auf den Kunststoffoberflächen erzeugen, aber auch gleichzeitig die Witterungsbeständigkeit von Kunststoffen, wie z.B. von Polycarbonaten, von Acrylnitril-Butadien-Styrol-Polymeren oder von Polyphenylenoxid, die bei Bewitterung einem starken photochemischen Abbau unterliegen, wesentlich erhöhen.

Für die Lackierungen der Formteile werden nach Beschaffenheit von deren Oberflächen und an die gestellten Anforderungen des Lacküberzuges die anzuwendenden Lacksysteme ausgewählt. Hierzu werden vor allem verwendet, oxidativ trocknende, fettsäurehaltige Kunstharzlacke, chemisch vernetzende Mehrkomponentenlacke aus Epoxid-, Polyurethan- oder ungesättigten Polyesterharzen und vorwiegend harte Polyacrylate, d.h. Lacke mit einem relativ hohen Anteil an Polymethylmethacrylat. Die Polyacrylatsysteme haben gegenüber den anderen Lacksystemen Vorteile in ihrer Witterungsbeständigkeit, d.h. sie vergilben nicht und unterliegen dabei keinem Abbau, weswegen die mechanischen Eigenschaften der Überzüge erhalten bleiben, sie sind ethanol- und wasserfest und sind einfach aus ihren organischen Lösungen auf den Oberflächen zu applizieren. (Ullmann, Encyklopädie der technischen Chemie, 4. Auflage, Band 15, Seiten 343 bis 345).

Sowohl unter den Gesichtspunkten des Umweltschutzes und der Arbeitssicherheit, als auch wegen der Gefahr der Beschleunigung der Bildung von Spannungsrissen und damit der Änderung der mechanischen Eigenschaften der Kunststoffe bei der Einwirkung von organischen Lösemitteln, wäre es fortschrittlich, die lösemittelhaltigen Lacke durch wäßrige Systeme zu ersetzen.

In der DE-A 30 07 936 werden wäßrige Polymerdispersionen zur Erzeugung von Schutz- und Dekorüberzügen, auch auf Kunststoffsubstraten, beansprucht, die Kombinationsdispersionen aus Celluloseestern und Poly(meth)acrylat und/oder Copolymerisaten des Poly(meth)acrylates sind, und die erfindungsgemäß fettsäuremodifizierte Harze, wie öl- oder fettsäuremodifizierte Alkydharze, enthalten, die gegenüber bis dahin bekannten Celluloseestern/Poly(meth)acrylat-Kombinationsdispersionen die entscheidenden Vorteile der Oberflächenhärte und einer guten Alkoholbeständigkeit bei ihrer Anwendung als Überzugsmaterialien ergeben. Wäßrige Dispersionen, die durch Polymerisation von (Meth)acrylsäureestern mit darin gelösten Celluloseestern hergestellt wurden, und die nach DE-A 30 07 936 Überzüge mit ungenügenden Eigenschaften ergeben, sind in der EP-B 0 010 424 und in der DE-A 32 00 765 beschrieben. Als Monomere für die Herstellung der Celluloseester-haltigen Poly(meth)acrylat-Phasen sind nach allen vorgenannten Druckschriften, Acryl- und/oder Methacrylsäureester mit Alkyl-, Cycloalkyl-, Phenyl- oder Benzylresten als Esterreste verwendbar.

Die Herstellung von Lacken nach der DE-A 30 07 936 erweist sich jedoch in mehrfacher Hinsicht als unvorteilhaft und riskant, da als Celluloseester, wie in den Beispielen durchweg gezeigt, Nitrocellulose, die in den Monomeren und weiteren organischen Lösemitteln gelöst ist, verwendet wird, und die während der Polymerisation der Monomeren längere Zeit höherer Temperatur ausgesetzt ist. Der Vorteil, wäßrige Systeme anstelle von Polymerlösungen in organischen Lösemitteln für die Überzugsherstellung zu verwenden, geht in diesem Stand der Technik durch die Mitverwendung von relativ großen Mengen organischer Lösemittel bei der Dispersionsherstellung und dem Benötigen weiterer größerer Mengen an Lösemittel für die Herstellung der Lacke aus den Polymeremulsionen, wie das bei deren Herstellung beschrieben ist, weitgehend verloren.

Dispersionen von (Meth)acrylatpolymeren, die im wesentlichen durch Emulsionspolymerisation von solchen Methacrylsäureestern und Acrylsäureestern erhalten werden, in denen die Estergruppe geradkettige bzw. verzweigte Alkylgruppen mit 1 bis 8, vorzugsweise solche mit 1 bis 4 C-Atomen enthält, und welche besonders die Methyl- und Ethylester sind, stellen die gängigen, handelsüblichen Poly-(meth)-acrylatdispersionen dar. Versuche mit Dispersionen dieser Art, Kunststofflackierungen mit vorgegebenen

Eigenschaften herzustellen, zeigten erstaunlicherweise, daß daraus resultierende Überzüge im Vergleich zu den aus Lösungen hergestellten, trotz gleichem oder ähnlichem Aufbau mit entsprechenden Monomeren, dem geforderten Eigenschaftsprofil nicht genügten. Dispersionspolymere mit relativ hoher Mindestfilmbildungstemperatur (MFT > 80 Grad C) führten praktisch nicht zu Filmen. Weicher eingestellte Polymerisate, d.h. Polymerisate, hergestellt mit Estergruppen aus längeren Alkylresten, z.B. $C_4$- bis $C_8$-Alkylresten, gaben Filme, welche hafteten aber klebrig und nicht alkoholfest waren.
Hohe Alkoholbeständigkeit wird z.B. für die aus Kunststoffen hergestellten Gehäuse vieler technischer Gebrauchsgegenstände, wie z.B. bei Fernsehgeräten, Videogeräten, Phonogeräten, Küchenmaschinen und auch bei Computergehäusen, gefordert.

Aufgabe und Lösung

Es bestand daher weiter die Aufgabe, wäßrige Polymerdispersionen, die einfach und sicher herzustellen sind, und welche bei ihrer Anwendung für die Herstellung von Überzugslacken auf Kunststoffoberflächen, die dazu geforderten Eigenschaften bringen, aber die oben geschilderten Nachteile der lösemittelhaltigen Lacksysteme nicht zeigen, zu finden.

Überraschenderweise wurde jetzt gefunden, daß mit Dispersionspolymeren auf (Meth)acrylat-Basis, die mit größeren Anteilen von (Meth)acrylestern, in denen die Estergruppen aromatische Gruppen sind, bzw. solche enthalten, aufgebaut sind, aus ihren wäßrigen Systemen, auf festen Kunststoffoberflächen Überzüge mit entsprechend hohem und gefordertem Eigenschaftsprofil erhalten werden.

Die Erfindung betrifft danach die:
Verwendung einer wäßrigen Dispersion von filmbildenden (Meth)acrylatpolymeren zum Herstellen eines Überzuges auf festen Kunststoffoberflächen durch Lackieren,
dadurch gekennzeichnet,
daß die (Meth)acrylatpolymeren Copolymere aus

1. 20 bis 90 Gew.-% von Acryl- und/oder Methacrylsäurealkyl- bzw. Cycloalkylestern mit 1 bis 10 C-Atomen im Esterrest,
2. 80 bis 10 Gew.-% von Acryl- und/oder Methacrylsäureestern mit aromatischen Gruppen als Esterrest, bzw. aromatische Gruppen im Esterrest enthaltend,
3. 0 bis 5 Gew.-% von polymerisierbaren Carbonsäuren,
4. 0 bis 10 Gew.-% von polymerisierbaren Ureidoverbindungen und
5. 0 bis 20 Gew.-% von weiteren polymerisierbaren Monomeren

sind.

Die Copolymerisate sind vorzugsweise Emulsionspolymerisate und insbesondere mehrphasig, beispielsweise nach dem Kern-Schalen-Modell aufgebaut.

Vorteile der Erfindung

Die erfindungsgemäßen Dispersionen enthalten kein organisches Lösemittel, sind praktisch geruchsfrei und sind mit Wasser verdünnbar. Die aus diesen Dispersionen auf Kunststoff-Oberflächen gebildeten Überzüge haften gut, sind hart, beständig gegen Wasser und Ethanol und damit für die Schlußlackierung von Kunststoffgegenständen hervorragend geeignet. Die Applizierung der Dispersion auf die zu veredelnden Oberflächen ist mit den gängigen Techniken einfach durchführbar und es bedarf keiner besonderen Härtungsreaktion auf der Kunststoffoberfläche, um einen Lack, sowohl als Klarlack oder als pigmentierten Überzug, mit dem bekannten Eigenschaftsprofil zu erzeugen.

Durchführung der Erfindung

Die erfindungsgemäß zu verwendenden (Meth)acrylatpolymeren werden in wäßriger Dispersion auf den zu behandelnden Kunststoff-Oberflächen von Gegenständen aufgebracht und werden dazu bevorzugt durch Emulsionspolymerisation in wäßrigem Medium hergestellt. In der erfindungsgemäßen Dispersion kommen (Meth)acrylatpolymerisate zur Verwendung, deren Filmbildungstemperatur über 0 Grad C, vorzugsweise im Bereich von 0 bis 80 Grad C liegt. Die Filmbildung muß bei einer Temperatur innerhalb von 0 bis 100 Grad C mit oder ohne filmbildenden Hilfsmitteln stattfinden.

Das wesentlich aus aliphatischen und aromatischen Estern der Acryl- und/oder Methacrylsäure bestehende und damit hydrophob eingestellte Polymerisat kann aber auch geringe Mengen weniger hydrophobe, ja sogar ausgesprochen hydrophile Monomere als Bausteine enthalten. Solche hydrophilen Monomere sind polymerisierbare Carbonsäuren, wie beispielsweise Acrylsäure, Methacrylsäure, Maleinsäure oder deren

Anhydrid. Sie sind in Mengen von 0 bis 5, vor allem von 0,1 bis 3 Gew.-% in das Dispersionspolymere eingebaut. Monomere mit basischen Gruppen, wie N-Dimethylaminoethylmethacrylat oder Acryl- und Methacrylamide, die im Amidrest auch Alkyl-, Cycloalkyl-oder Arylgruppen enthalten können, oder Monomere mit hydrophilen Alkoholen im Esterrest, wie beispielsweise 2-[2-(2-Ethoxiethoxi)ethoxi]ethylmethacrylat können in Mengen unter 10 Gew.-%, bevorzugt unter 5 Gew.-%, bis 0 Gew.-%, im Polymerisat eingebaut sein. Der Einbau solch polarer Monomerer in geringen Mengen wirkt sich auf die Stabilität der polymerhaltigen Dispersion positiv aus, in dem dadurch einer Verklumpung entgegengewirkt wird. Die so erreichten Langzeitstabilitäten sind für den Transport und die Lagerung der erfindungsgemäß zu verwendenden (Meth)acrylatpolymerdispersionen wesentlich.

Bei dem zwingenden hydrophoben Charakter des (Meth)acrylat-Polymerisats handelt es sich daher um ein überwiegend bis ausschließlich aus Estern der Acryl- bzw. Methacrylsäure hergestelltes Polymerisat. Zur Herstellung des Polymerisats können aber auch noch andere, sowohl praktisch wasserunlösliche Comonomere, wie z.B. Styrol, $\alpha$-Methylstyrol, Vinylacetat, als auch hydrophilere polymerisierbare Verbindungen, wie N-Vinylimidazol und polymerisierbare Ureidoverbindungen, in solchen Anteilen mitverwendet werden, daß die gewünschten Eigenschaften der Kunststoff-Oberflächenlacke eingehalten werden. Im allgemeinen liegt ihr Anteil dann bei 0 bis 20 Gew.-%, vorzugsweise bei 0 bis 10 Gew.-%.

Das (Meth)acrylatpolymerisat ist wesentlich, d.h. aus 80 bis 100 Gew.%, vor allem aus 85 bis 99 Gew.-% und besonders aus 80 bis 98 Gew.-% aus Estern der Acryl- und/oder Methacrylsäure aufgebaut, wobei dies Copolymerisate aus 20 bis 90 Gew.-%, vor allem aus 30 bis 80 Gew.-%, insbesondere aus 40 bis 70 Gew.-% von Acrylsäure- und/oder Methacrylsäurealkyl- bzw. cycloalkylestern mit 1 bis 10 C-Atomen, vor allem mit 1 bis 6 C-Atomen, insbesondere Alkylester mit 1 bis 4 C-Atomen im Esterrest, und 80 bis 10 Gew.-%, vor allem 20 bis 70 Gew.-%, insbesondere 30 bis 60 Gew.-% von Acrylsäure- und/oder Methacrylsäureestern mit aromatischen Gruppen als Esterrest, bzw. aromatische Gruppen im Esterrest enthaltend, sind.

Als aliphatische bzw. cycloaliphatische Acryl- und Methacrylester werden beispielsweise eingesetzt: Methylacrylat, Ethylacrylat, Isopropylacrylat, n-Butylacrylat, Methylmethacrylat, Ethylmethacrylat, n-Butylmethacrylat, n-Hexylmethacrylat, 2-Ethylhexylmethacrylat, Cyclohexylmethacrylat, 3,3,5-Trimethylcyclohexylmethacrylat.

Als Acryl- und Methacrylester mit aromatischen Gruppen als Esterrest, bzw. solche im Esterrest enthaltend, werden bevorzugt erfindungsgemäß eingesetzt:
Verbindungen der allgemeinen Formel

$$H_2C = \overset{\displaystyle R}{\overset{|}{C}} - \overset{\displaystyle O}{\overset{\|}{C}} - O - (X)_a - (Y)_b - A \qquad I,$$

in der

- R = H oder $CH_3$,
- X = $CH_2$ mit
- a = 0, 1, 2, 3 oder 4 ist, oder für a = 3 oder 4, X auch eine verzweigte $C_3H_6$- oder $C_4H_8$-Gruppierung sein kann,
- Y = O oder NH mit
- b = 0 oder 1 und
- A = ein $C_6$- bis $C_{10}$-Arylrest, wie Phenyl oder $C_1$- bis $C_4$-Alkyl-Phenyl oder Naphthyl, bedeuten.

Beispiele für Verbindungen, die der allgemeinen Formel I entsprechen sind:
Phenylacrylat, p-Methylphenylacrylat, Phenylmethacrylat, p-Methylphenylmethacrylat, 1-Naphthylmethacrylat, Benzylmethacrylat, 2-Phenylethylmethacrylat, 3-Phenyl-n-propylacrylat, 2-Phenoxiethylmethacrylat, 2-Phenylaminoethylmethacrylat.

In den erfindungsgemäßen wäßrigen Dispersionen sind die (Meth)acrylatpolymeren beispielsweise nach dem Kern-Schalen-Modell mehrphasig aufgebaut. Im einfachsten Fall ist hierbei ein Polymerpartikel als Kern von weiterem Polymermaterial, das gegenüber dem Kernmaterial vorteilhafterweise eine andere Zusammensetzung hat, umhüllt. Solche Polymerstrukturen lassen sich wie bekannt besonders einfach durch Emulsionspolymerisation herstellen (Journal of Polymer Science, Vol. 22, 1365 - 1372 (1984)). Daher stellt man die erfindungsgemäßen wäßrigen Polymerdispersionen am vorteilhaftesten durch Polymerisation der dafür geeigneten Monomeren in wäßriger Emulsion, teilweise auch in Suspension, nach einschlägig bekannten Verfahren her (s. dazu H. Rauch-Puntigam, Th. Völker, "Acryl- und Methacrylverbindungen",

Seiten 217 bis 228, Springer-Verlag, Heidelberg 1967; Ullmann's Encyclopädie der Technischen Chemie, 4. Auflage, Band 19, Seiten 11 bis 14 und 125 bis 141, Verlag Chemie 1980).

Zum Erreichen eines mehrphasigen Aufbaus der dispergierten Polymerteilchen werden bei der Emulsionspolymerisation bekanntermaßen nacheinander verschiedene Monomerzusammensetzungen in denselben Polymerisationsansatz eingegeben und jeweils unter den Bedingungen der Emulsionspolymerisation polymerisiert. Der Aufbau der für die Lackierung von Kunststoff-Oberflächen erfindungsgemäß dispergierten Polymerteilchen kann vorteilhaft so vorgenommen werden, daß zunächst ein Kern mit einem hohen Anteil, d.h. mit mehr als 70 Gew.-%, besonders mit 90 bis 99 Gew.-%, an (Meth)acrylsäureester-Bausteinen - sowohl mit Alkyl- als auch mit Arylestergruppen - hergestellt wird, wobei noch in Mengen von etwa 0,5 bis 5 Gew.-% mehrfunktionelle Monomere, wie beispielsweise Glykoldimethacrylat, Butandiol-1,4-diacrylat, Allylmethacrylat, Triallylcyanurat, mit einpolymerisiert werden können. Die mehrfunktionellen Monomeren sorgen für eine gewisse gewünschte Vernetzung des Kerns und bringen Pfropfstellen für das Anbinden der Polymerschale an den Kern. In der Polymerschale bzw. den Polymerschalen sind 30 bis 100 Gew.-%, besonders 40 bis 80 Gew.-% der in das Gesamt-Kern-Schalen-Polymerisat eingebrachten Acryl-und/oder Methacrylsäureestern mit aromatischen Gruppen als bzw. im Esterrest, neben anderen Monomeren insbesondere Acryl- und/oder Methacrylsäurealkylestern mit 1 bis 10 C-Atomen im Alkylrest, eingebaut. Das Gewichtsverhältnis von Acryl- bzw. Methacrylsäureestern mit aromatischen Gruppen als bzw. in dem Esterrest zu Acryl- bzw. Methacrylsäurealkylestern liegt hierbei im Bereich von 30 : 70 bis 70 : 30.

Die mit 0 bis 5 Gew.-% im Dispersionspolymerisat eingebauten polymerisierbaren Carbonsäuren können statistisch in dem Polymerisat verteilt sein oder können beim Vorliegen von Kern-Schale-Polymerisaten entweder vorwiegend in dem Kern oder vorwiegend in der Schale, bzw. den Schalen, als auch über die Kern-Schalen-Phasen etwa gleichmäßig oder auch ungleichmäßig, vorhanden sein. In besonderen Fällen hat es sich als günstig erwiesen, in das Polymerisat noch Monomere einzubauen, die dafür Sorge tragen, daß der aus dem Dispersionspolymerisat erhaltene Überzug auf dem Kunststoffsubstrat noch besser haftet. Solche haftverbessernde Gruppen sind beispielsweise die polaren bzw. hydrophilen Ureidogruppen oder Imidazolgruppen, die insbesondere mit polaren Kunststoffsubstraten in Wechselwirkung treten. Monomere mit denen solche Haftgruppen vorzugsweise eingebaut werden können sind beispielsweise N-Methacrylamidomethylenharnstoff, N-(2-Methacryloyloxyethyl)ethylenharnstoff, N-Vinylimidazol. Sie können in Mengen von 0 bis 10 Gew.-% in dem erfindungsgemäßen Dispersionspolymerisat eingebaut sein.

Die Emulsionspolymerisation wird mit den dafür bekannten, allgemein üblichen, nichtionischen, kationischen und anionischen Emulgatoren, wie z.B. den Alkali- und Ammoniumsalzen von sulfatierten Fettalkoholen, aromatischen Sulfonsäuren oder sulfierten Ethylenoxidaddukten durchgeführt.
Geeignete anionische Emulgatoren sind z.B. sulfierte und mit Alkali neutralisierte, oxethylierte Alkylphenole, die z.B. aus Nonylphenol- oder Triisobutylphenoladdukten mit 3 bis 30 Ethylenoxideinheiten pro Molekül hergestellt sein können.

Es kann nach dem Batchverfahren oder nach einem Zulaufverfahren wie dem Monomerzulauf- oder dem Emulsionszulaufverfahren vorgegangen werden. Mit besonderem Vorteil bedient man sich des Emulsionszulaufverfahrens. Bei diesem Verfahren wird nur ein Teil der Wasserphase, in der Regel 10 bis 70 % der Gesamtmenge im Polymerisationsgefäß vorgelegt. Im verbleibenden Teil der Wasserphase, die in der Regel einen Teil des Emulgiermittels enthält, werden die Monomerenphasen unter Bedingungen, unter denen noch keine Polymerisation eintritt, emulgiert und diese Emulsionen werden nacheinander in das Reaktionsgefäß eingeführt, wo Polymerisationsbedingungen herrschen.
Die Verfahren können in mannigfaltiger Weise abgewandelt werden. So kann man z.B. den Initiator oder einen Teil des Emulgiermittels getrennt von den Monomerphasen allmählich zulaufen lassen oder portionsweise eintragen. Als Polymerisationsinitiatoren werden überwiegend Alkali- oder Ammoniumperoxodisulfate verwendet, jedoch können daneben oder stattdessen auch andere, vorzugsweise wasserlösliche Initiatoren, wie z.B. 4,4′-Azobis-4,4′-dicyano-Valeriansäure oder Redoxsysteme, wie Peroxosulfate, Sulfoxyverbindungen und Eisensalze oder Wasserstoffperoxide und Eisen-II-Salze, eingesetzt werden.

Die letzteren werden getrennt von den Monomerphasen zugesetzt, da sie schon bei Raumtemperatur die Polymerisation auslösen. Die Umsetzungstemperatur richtet sich nach der Zerfallstemperatur des Initiators und liegt im allgemeinen zwischen 10 und 100 Grad C.
Die Polymerisatkonzentration in den Dispersionen liegt bei deren Herstellung im Bereich von etwa 30 bis 70 Gew.-% Feststoff und die Viskositäten der Polymerdispersionen liegen im allgemeinen im Bereich von 10 bis 5 000 mPa s (ISO 2555).
Die Teilchengröße der Emulsionspolymerisate liegt vorteilhaft im Bereich von 20 bis 600 nm, vorzugsweise im Bereich von 50 bis 400 nm. (Bestimmung durch Photonenkorrelationsspektroskopie, auch als Autokorrelationsspektroskopie bekannt, mit dem Nano-Sizer [TDM] der Firma Coulter Electronics, Ltd., Luton, Beds.).

Die Polymerisate haben in der Regel minimale Filmbildungstemperaturen (MFT) im Bereich von 0 Grad C bis ca. 100 Grad C, beispielsweise solchen von ca. 20 Grad C bis 80 Grad C. (Ullmanns Encyklopädie der technischen Chemie, 4. Auflage, Band 19, Seiten 17, 19 und 141, DIN 53 787).

Die erfindungsgemäßen Kunststoff-Oberflächenbeschichtungsmittel haben vor allem Bedeutung für die Aufbringung von Überzügen, für klare und pigmentierte Überzüge, als Dekor- oder Schutzüberzüge, auf Halbzeug- oder Fertigteilen aus thermoplastischen Kunststoffen. Als Polymere für zu beschichtende Teile aus thermoplastischen Kunststoffen mit den erfindungsgemäßen wäßrigen Polyacrylat-Systemen sind Polystyrol, schlagfestes Polystyrol wie z.B. Styrol-Butadien-Copolymerisate oder Acrylnitril-Butadien-Styrol-(ABS)-Copolymerisate, Polycarbonat, Polymethylmethacrylat, Polyphenylenoxid (PPO), Hart-Polyvinylchlorid (PVC), Blends zwischen Polycarbonat und ABS-Copolymerisaten geeignet. Die Verwendung der neuen wäßrigen Polyacrylat-Systeme ist vorteilhaft, da sich aus diesen auf den verschiedenen Polymerisaten gut haftende, wasser- und alkoholbeständige Überzüge bilden, weil in vielen Fällen in einem Gebrauchsartikel verschiedene Kunststoffe verarbeitet sind. Dadurch läßt sich weiter auf Kunststoff-Oberflächen der Gebrauchsartikel, auch bei Aufbau aus verschiedenen Polymermaterialien, eine gleichmäßige Farbqualität realisieren.

Bei der Lackierung wird die wäßrige Polymerdispersion auf den zu schützenden Gegenstand mit der Kunststoff-Oberfläche appliziert. Dazu werden vorteilhaft Polymerdispersionen, die als solche durch Emulsionspolymerisation hergestellt werden, gegebenenfalls nach Verdünnung mit Wasser, eingesetzt. Zur Filmbildungsverbesserung der Polymerisate auf den Kunststoff-Oberflächen können wie bekannt Filmbildungshilfsmittel, wie z.B. Butylglykol, mit der Polymerdispersion in Mengen von 2 bis 20 Gew.-%, bezogen auf die Polymerisatmenge, aufgebracht werden. Solche Filmbildungshilfsmittel sind keine guten Lösemittel für Kunststoffe. Sie fördern daher praktisch nicht die Spannungsrißkorrosion der Kunststoffsubstrate. Als temporäre Weichmacher verdunsten sie beim Trocknen und beim Lagern der beschichteten Kunststoffe aus dem Überzug, wodurch dieser seine eigentliche Härte schnell erreicht.

Die Aufbringung der Überzüge kann nach den gängigen Verfahren, wie z.B. durch Tauchen, durch Aufsprühen mit einer handgeführten Spritzpistole oder auch maschinell, durch Walzenauftrag , durchgeführt werden. (Ullmanns Encyklopädie der technischen Chemie, 4. Auflage, Band 15, Seiten 343 bis 345 und Seiten 688 bis 695).

## BEISPIELE

### I. Dispersionsherstellung

#### Beispiel 1

In einem 2 l-Reaktionsgefäß, ausgerüstet mit Rückflußkühler, Rührwerk und Zulaufgefäß, werden 0,81 g Natriumlaurylsulfat und 0,54 g Ammoniumperoxodisulfat in 430 g entsalztem Wasser bei 20 Grad C gelöst.

Zu dieser Lösung werden nacheinander die folgenden 2 Emulsionszuläufe bei 80 Grad C unter Rühren zudosiert.

Der Zulauf von Emulsion I, bestehend aus:
266,8 g Phenylmethacrylat
266,2 g Ethylacrylat
7,0 g Methacrylsäure
4,86g Natriumlaurylsulfat
1,62g Ammoniumperoxodisulfat und
470,0 g entsalztes Wasser
erfolgt innerhalb von 3 Stunden. In direktem Anschluß wird während der nächsten Stunde Emulsion II bestehend aus
83,2 g Phenylmethacylat
83,3 g Ethylacrylat
13,6 g N-(2-Methacryloyloxyethyl)ethylenharnstoff
1,62g Natriumlaurylsulfat
0,54g Ammoniumperoxodisulfat und
275,0 g entsalztes Wasser
zudosiert.

Nach Zulaufende wird der Ansatz auf Raumtemperatur abgekühlt; hierbei erfolgt bei 70 Grad C die Zugabe von 0,45 g 1,4-Diisopropylbenzolmonohydroperoxid und 0,36 g Natriumhydroxymethylsulfinat.

Die Dispersion wird anschließend mit 54 g Octylphenoxypolyethoxyethanol (mittlerer Ethoxylierungsgrad 9) versetzt und filtriert. Der pH der ca. 40 %-igen Dispersion beträgt 1,9 ($r_{NS}$ = 70 nm).

Beispiel 2

In einem 2 l Reaktionsgefäß, ausgerüstet mit Rückflußkühler, Rührwerk und Zulaufgefäß, werden 0,81 g Natriumlaurylsulfat und 0,54 g Ammoniumperoxodisulfat in 430 g entsalztem Wasser bei 20 Grad C gelöst.

In diese Lösung wird bei 80 Grad C unter Rühren eine Emulsion, bestehend aus

352,8 g Phenylmethacrylat
352,8 g Ethylacrylat
14,4 g Methacrylsäure
6,48g Natriumlaurylsulfat
2,16g Ammoniumperoxodisulfat und
745,0 g entsalztes Wasser

innerhalb von 4 Stunden zugegeben.

Nach Zulaufende wird der Ansatz auf Raumtemperatur abgekühlt; hierbei erfolgt bei 70 Grad C die Zugabe von 0,45 g 1,4-Diisopropylbenzolhydroperoxid und 0,36 g Natriumhydroxymethylsulfinat. Nach Zugabe von 54,0 g Octylphenoxypolyethoxyethanol (mittlerer Ethoxylierungsgrad 9) wird die Dispersion filtriert. Der pH der ca. 40 %-igen Dispersion beträgt 2,0 ($r_{NS}$ = 73 nm).

II. Kunststofflackierung

A. Herstellung der Farben

| | |
|---|---|
| 175 g | Titandioxid, Rutiltyp |
| 150 g | Aluminiumsilikat |
| 4 g | Dispergierhilfsmittel auf Acrylatbasis (40 % Trockengehalt) |
| 6 g | Entschäumer und |
| 665 g | der in Beispiel 1 oder 2 genannten Dispersion werden gut vermischt und ca. 24 Stunden in der Kugelmühle dispergiert |
| 1000 g | |
| 30 g | Anschließend werden der Farbe Diethylenglykolmonobutyläther unter gutem Rühren zugegeben. |
| Vor der Verarbeitung läßt man die Farbe noch 24 Stunden lagern. | |

B. Herstellung der Anstriche

Die Farben der unter A genannten Zusammensetzung werden mit einer Aufziehrakel auf Kunststoffplättchen mit einer Größe von 120 x 70 x 3 mm aufgetragen und 48 Stunden bei 23 Grad C und 50 % relative Feuchte getrocknet. Die Trockenschichtdicke liegt bei 40 µm.

C. Anstrichprüfung

1. Die Haftfestigkeit der Anstriche wird nach dem Gitterschnitt-Test gemäß DIN 53 151 geprüft. Die Prüfbedingungen werden zusätzlich verschärft, indem man auf die Prüflacke ein Haftklebeband aufbringt und wieder ruckartig abzieht (GT).
2. Alkoholfestigkeit:
Zur Bestimmung der Alkoholfestigkeit wird ein Alkohol getränkter schwarzer Filzstreifen mit einer Belastung von 450 g/m$^2$ mit einer Geschwindigkeit von 15 cm/sec. auf einer Strecke von 6,5 cm hin und herbewegt. Angegeben wird die Intensität der Verfärbung des Filzes durch abgelöste Pigmentteilchen nach 10 und 25 Doppelhüben (DH).

D. Ergebnisse

Wie aus beiliegender Tabelle hervorgeht, werden mit beiden in den Beispielen genannten Dispersionen hervorragende Haftfestigkeit auf den Kunststoffen: Hart-PVC, Polycarbonat, ABS, ABS-modifiziertes Polycarbonat, schlagfestes Polystyrol und PPO erzielt.

Während die heute üblichen Dispersionsanstriche schon nach kurzer Zeit angelöst werden, d.h. der Filzstreifen stark gefärbt ist, zeigen Anstriche der oben genannten Zusammensetzung keine oder nur schwache Verfärbung des Filzstreifens, d.h. die Anstriche werden von Ethanol praktisch nicht angelöst.

**Gitterschnittprüfung**

| | |
|---|---|
| GT 0 | |
| GT 1 | |
| GT 2 | Abnahme der Haftfestigkeit |
| GT 3 | |
| GT 4 | |

GT 0/0*

* = Zweite Zahl gibt den Haftfestigkeitswert nach dem Abziehen des Klebefilms an.

| Anstrich | Untergrund | Haftfestigkeit | Alkoholfestigkeit |
|---|---|---|---|
| Mit Disp. aus Beispiel 1 | Hart-PVC | GT 0/0 | Nach 10 DH praktisch keine, nach 25 DH nur schwache Verfärbung des Filzstreifens |
| | Polycarbonat | 0/0 | |
| | ABS | 0/0 | |
| | ABS mod. Polycarbonat | 0/0 | |
| | schlagfestes Polystyrol | 0/0 | |
| | PPO | 0/1 | |
| Mit Disp. aus Beispiel 2 | Hart-PVC | GT 0/0 | nach 10 und 25 DH nur schwache Verfärbung des Filzstreifens |
| | Polycarbonat | 0/0 | |
| | ABS | 0/0 | |
| | ABS mod. Polycarbonat | 0/0 | |
| | schlagfestes Polystyrol | 0/0 | |
| | PPO | 0/2 | |

## Patentansprüche

**1.** Verwendung von wäßrigen Dispersionen filmbildender (Meth)acrylatpolymerisate zur Beschichtung von Kunststoffen, ausgewählt aus der Gruppe Polystyrol, schlagzähes Polystyrol, Polycarbonat, Polymethylmethacrylat, Polyphenylenoxid, Hart-Polyvinylchlorid oder Blends aus Polycarbonat und ABS-Copolymerisaten,

dadurch gekennzeichnet,

daß die (Meth)acrylatpolymerisate Copolymerisate darstellen, bestehend aus:

a) 20 bis 90 Gew.-% Acryl und/oder Methacrylsäurealkyl- bzw. - cylcoalkylestern mit 1 bis 10 C-Atomen im Esterrest,
b) 80 bis 10 Gew.-% Acryl- und/oder Methacrylsäureestern mit aromatischen Gruppen als Esterrest bzw. aromatische Gruppen im Esterrest enthaltend
c) 0 bis 5 Gew.-% polymerisierbaren Carbonsäuren,
d) 0 bis 10 Gew.-% polymerisierbaren Ureidoverbindungen, und
e) 0 bis 20 Gew.-% weiteren polymerisierbaren Verbindungen.

**2.** Verwendung von wäßrigen Dispersionen von filmbildenden (Meth)acrylatpolymeren nach Anspruch 1, dadurch gekennzeichnet, daß die Acryl- und/oder Methacrylsäureester mit aromatischen Gruppen als Esterrest, bzw. aromatische Gruppen im Esterrest enthaltend, Verbindungen der allgemeinen Formel

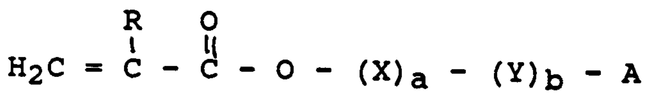

sind, in der

R = H oder $CH_3$,
X = $CH_2$ mit
a = 0, 1, 2, 3 oder 4 ist, oder für a = 3 oder 4, X auch eine verzweigte $C_3H_6$- oder $C_4H_8$-Gruppierung sein kann,
Y = O oder NH mit
b = 0 oder 1 und
A = $C_6$- bis $C_{10}$-Arylrest

bedeuten.

**3.** Verwendung von wäßrigen Dispersionen von filmbildenden (Meth)acrylatpolymeren nach den Ansprüchen 1 und 2, dadurch gekennzeichnet, daß die Copolymerisate durch Emulsionspolymerisation hergestellt sind und mehrphasige Polymerisate sind.

**4.** Verwendung von wäßrigen Dispersionen von filmbildenden (Meth)acrylatpolymeren nach den Ansprüchen 1 bis 3, dadurch gekennzeichnet, daß die Emulsionspolymerisate als Kern-Schalen-Partikel mehrphasig aufgebaut sind.

## Claims

**1.** Use of aqueous dispersions of film-forming (meth)acrylate polymers for coating plastics materials, chosen from the group of polystyrene, impact-resistant polystyrene, polycarbonate, polymethylmethacrylate, polyphenyleneoxide, hard polyvinylchloride or blends of polycarbonate and ABS-copolymers, characterised in that the (meth)acrylate polymers are copolymers consisting of
a) 20 to 90 wt.% of acrylic and/or methacrylic acid alkyl or cycloalkylesters having 1 to 10 C-atoms in the ester group,
b) 80 to 10 wt.% of acrylic and/or methacrylic acid esters with aromatic groups as ester group or containing aromatic groups in the ester group.
c) 0 to 5 wt.% of polymerisable carboxylic acids,
d) 0 to 10 wt.% of polymerisable ureido compounds, and
e) 0 to 20 wt.% of further polymerisable compounds.

**2.** Use of aqueous dispersions of film-forming (meth)acrylate polymers according to claim 1, characterised in that the acrylic and/or methacrylic acid esters having aromatic groups as ester group or containing aromatic groups in the ester group are compounds of the general formula

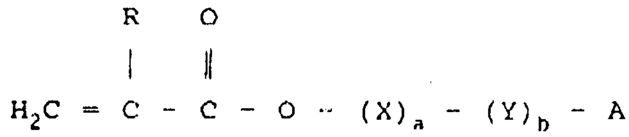

wherein,

R = H or $CH_3$,
X = $CH_2$ with
a = 0, 1, 2, 3 or 4, or when a = 3 or 4, X may also represent a branched $C_3H_6$- or $C_4H_8$-group,
Y = O or NH with
b = 0 or 1 and
A = $C_6$- to $C_{10}$-aryl group.

**3.** Use of aqueous dispelsions of film-forming (meth)acrylate polymers according to Claims 1 and 2, characterised in that the copolymers are produced by emulsion polymerisation and are multi-phase polymers.

**4.** Use of aqueous dispersions of film-forming (meth)acrylate polymers according to Claims 1 to 3, characterised in that the emulsion polymers have a multi-phase composition as core-shell particles.

## Revendications

**1.** Utilisation de dispersions aqueuses de polymères de (méth)acrylate filmogènes pour l'enduction de matières plastiques choisies dans le groupe du polystyrène, du polystyrène résistant au choc, du polycarbonate, du polyméthacrylate de méthyle, du polyoxyde de phénylène, du polychlorure de vinyle dur ou de mélanges de polycarbonate et de copolymères ABS, caractérisée en ce que les polymères de (méth)acrylate sont des copolymères composés de

a) 20 à 90% en poids d'esters alkyliques ou cycloalkyliques d'acide acrylique et/ou méthacrylique à 1-10 atomes de carbone dans le reste ester,
b) 80 à 10% en poids d'esters d'acide acrylique et/ou méthacrylique comportant des groupements aromatiques comme reste ester ou contenant des groupements aromatiques dans le reste ester,
c) 0 à 5% en poids d'acides carboxyliques polymérisables.
d) 0 à 10% en poids de composés uréido polymérisables, et
e) 0 à 20% en poids d'autres composés polymerisables.

**2.** Utilisation de dispersions aqueuses de polymères de (méth)acrylate filmogènes selon la revendication 1, caractérisée en ce que les esters d'acide acrylique et/ou méthacrylique comportant des groupements aromatiques comme reste ester ou contenant des groupements aromatiques dans le reste ester sont des composés de formule générale

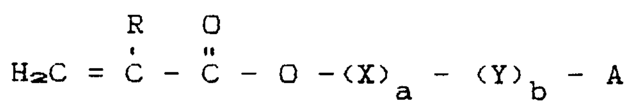

dans laquelle

R = H ou $CH_3$,
X = $CH_2$ avec a = 0, 1, 2, 3 ou 4 ou, pour a = 3 ou 4, X peut être aussi un groupement $C_3H_6$ ou $C_4H_8$ ramifié,
Y = O ou NH avec b = 0 ou 1, et
A = reste aryle en $C_6$-$C_{10}$.

**3.** Utilisation de dispersions aqueuses de polymères de (méth)acrylate filmogènes selon la revendication 1 ou 2, caractérisée en ce que les copolymères sont préparés par polymérisation en émulsion et sont des polymères à plusieurs phases.

4. Utilisation de dispersions aqueuses de polymères de (méth)acrylate filmogènes selon l'une quelconque des revendications 1 à 3, caractérisée en ce que les produits de polymérisation en émulsion ont une structure à plusieurs phases, sous forme de particules à noyau-enveloppe.